# EUROPEAN PATENT APPLICATION

(11) **EP 4 535 471 A1**
(43) Date of publication of application: **09.04.2025**
(21) Application number: 22945246.1
(22) Date of filing: 08.06.2022
(51) Int. Cl.: H01M 10/04, H01M 50/572

(54) **ELECTROCHEMICAL DEVICE AND ELECTRONIC DEVICE**

(71) Applicant: Ningde Amperex Technology Ltd., Ningde, Fujian 352106 (CN)
(72) Inventor: YU, Yangyang, Ningde, Fujian 352106 (CN)
(74) Representative: Icosa
(86) International application number: PCT/CN2022/097599
(87) International publication number: WO 2023/236101

(57) **Abstract**

This application provides an electrochemical device, including an electrode assembly. The electrode assembly is of a winding structure, including a first electrode plate, a second electrode plate, and a separator disposed between the first electrode plate and the second electrode plate. The first electrode plate includes a first current collector and a first active material layer, where the first current collector includes a first uncoated foil zone. The second electrode plate includes a second current collector and a second active material layer, where the second current collector includes a second uncoated foil zone. The first uncoated foil zone includes a first region, the first region being located at an outermost layer of the first electrode plate. The second uncoated foil zone includes a second region, the second region being located at an outermost layer of the second electrode plate. The electrochemical device further includes a bonding member, the bonding member includes a bonding layer and a metal layer stacked together, the bonding layer includes a conductive material, and the bonding member is bonded to at least one of the first region or the second region through the bonding layer. This application further provides an electronic device. This application may improve the safety and reliability of the electrochemical device.

## Description

### TECHNICAL FIELD

This application relates to the field of energy storage devices, specifically to an electrochemical device and an electronic device.

### BACKGROUND

Electrochemical devices (for example, batteries) are widely used in electronic products such as electronic mobile devices, electric tools, and electric vehicles. To improve the pass rate of safety tests such as nailing and heavy object impact, elongated positive uncoated foil zone and negative uncoated foil zone may be provided at the ends of the electrode plates of the electrode assembly, so that a vest structure is formed on the outer circle of the electrode assembly after winding. When an external sharp conductor pierces the electrochemical device, a short circuit may rapidly occur between the elongated positive uncoated foil zone and negative uncoated foil zone, causing the electrochemical device to discharge.

However, the pass rate of safety tests for existing electrochemical devices is still relatively low.

### SUMMARY

To address the above deficiencies, it is necessary to provide an electrochemical device.

In addition, it is further necessary to provide an electronic device having the foregoing electrochemical device.

A first aspect of this application provides an electrochemical device, including an electrode assembly. The electrode assembly is of a winding structure, including a first electrode plate, a second electrode plate, and a separator disposed between the first electrode plate and the second electrode plate. The first electrode plate includes a first current collector and a first active material layer disposed on a surface of the first current collector, the first current collector includes a first uncoated foil zone not disposed with the first active material layer. The second electrode plate includes a second current collector and a second active material layer disposed on a surface of the second current collector, and the second current collector includes a second uncoated foil zone not disposed with the second active material layer. The first uncoated foil zone includes a first region, the first region being located at an outermost layer of the first electrode plate. The second uncoated foil zone includes a second region, the second region being located at an outermost layer of the second electrode plate. The electrochemical device further includes a bonding member, the bonding member including a bonding layer and a metal layer stacked together. The bonding layer includes a conductive material. The bonding member is bonded to at least one of the first region or the second region through the bonding layer.

In this application, when the electrochemical device undergoes mechanical abuse (such as nailing or heavy object impact), the first region and the second region may come into contact and conduct through the bonding member, resulting in a short circuit, which diverts a short circuit current within the electrode assembly, causing the electrochemical device to discharge, thus reducing a risk of fire or explosion of the electrochemical device. Meanwhile, the bonding member may improve the mechanical strength of the first region and/or the second region, reducing a risk of high-temperature melting at the short-circuit point, so that the electrochemical device may continuously short circuit through the aforementioned short-circuit point when subjected to the aforementioned mechanical abuse, thereby improving the safety and reliability of the electrochemical device. Moreover, the bonding member is only disposed on at least one of the first region or the second region, which also reduces the impact on the energy density of the electrochemical device.

In some possible embodiments, in a winding direction of the electrode assembly, the first region includes a first segment, a first bent segment, a second segment, and a second bent segment connected sequentially. The bonding member is disposed on surfaces of the first segment and the second segment. Therefore, when the electrochemical device is nailed (especially when a nailing depth is less than a thickness of the electrochemical device) or impacted by a heavy object from one side of the first segment or the second segment, this always enables the first region and the second region to come into contact and short circuit and reduces the risk of high-temperature melting at the short-circuit point. Especially when the first region is aluminum foil in some embodiments, the bonding member may reduce the risk of high-temperature melting of the aluminum foil at the short-circuit point during nailing. Moreover, when a foreign object completely penetrates the electrochemical device, the bonding member increases the number of short-circuit points that may continuously short circuit within the electrode assembly, which helps to divert the short-circuit current within the electrode assembly more quickly, improving the safety and reliability of the electrochemical device.

In some possible embodiments, the bonding member is further disposed on a surface of at least one of the first bent segment or the second bent segment. Therefore, when the electrochemical device is nailed or impacted by a heavy object from one side of the first bent segment or the second bent segment, this enables the first region and the second region to come into contact and short circuit and reduces the risk of high-temperature melting at the short-circuit point, ensuring that the electrochemical device continuously short circuits through the aforementioned short-circuit point, thereby further improving safety and reliability.

In some possible embodiments, in the winding direction of the electrode assembly, the second region includes a third bent segment, a third segment, a fourth bent segment, and a fourth segment connected sequentially. The bonding member is disposed on surfaces of the third segment and the fourth segment. Therefore, when the electrochemical device is nailed (especially when the nailing depth is less than the thickness of the electrochemical device) or impacted by a heavy object from one side of the third segment or the fourth segment, this always enables the first region and the second region to come into contact and short circuit and reduces the risk of high-temperature melting at the short-circuit point. Especially when the second region is copper foil in some embodiments, the bonding member being bonded to the surface of the copper foil makes the improvement in mechanical strength of the vest structure more significant. Therefore, during heavy object impact, the copper foil may maintain a larger area of contact conduction with the aluminum foil to divert the short-circuit current within the electrode assembly. Moreover, when a foreign object completely penetrates the electrochemical device, the bonding member increases the number of short-circuit points that may continuously short circuit within the electrode assembly, which helps to divert the short-circuit current within the electrode assembly more quickly, improving the safety and reliability of the electrochemical device.

In some possible embodiments, the bonding member is further disposed on a surface of at least one of the third bent segment or the fourth bent segment. Therefore, when the electrochemical device is nailed or impacted by a heavy object from one side of the third bent segment or the fourth bent segment, this similarly enables the first region and the second region to come into contact and short circuit and reduces the risk of high-temperature melting at the short-circuit point.

In some possible embodiments, in a winding direction of the electrode assembly, the bonding member disposed on the first region and the bonding member disposed on the second region are located on different sides of a winding center of the electrode assembly, respectively. At this time, when the electrochemical device is nailed or impacted by a heavy object from different sides of the winding center, this always enables the first region and the second region to come into contact and short circuit and reduces the risk of high-temperature melting at the short-circuit point, ensuring that the electrochemical device continuously short circuits through the aforementioned short-circuit point, thereby further improving safety and reliability.

In some possible embodiments, in a winding direction of the electrode assembly, the bonding member disposed on the first region and the bonding member disposed on the second region are located on a same side of a winding center of the electrode assembly, respectively. At this time, when a foreign object penetrates or a heavy object impacts the first region and the second region provided with the bonding member, the bonding member may simultaneously improve the mechanical strength of the first region and the second region at a same short-circuit point, further reducing the risk of high-temperature melting at the short-circuit point, thereby improving the safety and reliability of the electrochemical device.

In some possible embodiments, the electrode assembly further includes a first tab and a second tab. The first tab is electrically connected to the first current collector, and the second tab is electrically connected to the second current collector. The bonding member is provided with a first concave portion and a second concave portion. In a thickness direction of the electrode assembly, a projection of the first concave portion in the first region covers a projection of the first tab in the first region, and a projection of the second concave portion in the first region covers a projection of the second tab in the first region. Therefore, a total thickness of the electrode assembly at the locations corresponding to the first tab and the second tab is reduced, compensating for an increase in a total thickness of the electrochemical device due to the provision of the bonding member, which is conducive to improving energy density.

In some possible embodiments, the bonding layer includes at least one of a conductive silver adhesive or a conductive silicone adhesive, providing the bonding layer with high conductivity and adhesion. In some possible embodiments, the metal layer includes at least one of copper, aluminum, titanium, or nickel, providing the metal layer with high conductivity.

In some possible embodiments, a thickness of the bonding layer is 4 micrometers to 10 micrometers. Thus, while the bonding reliability of the bonding layer is increased, the impact on the energy density of the electrochemical device due to the excessive thickness of the bonding layer is reduced. In some possible embodiments, a thickness of the metal layer is in a range of 4 micrometers to 20 micrometers. Thus, while the mechanical strength of the first region and/or the second region is increased, the impact on the energy density of the electrochemical device due to the excessive thickness of the metal layer is reduced.

In some possible embodiments, the first region is located at an outermost circle of the electrode assembly, and the second region is located at a next outermost circle of the electrode assembly. When the first region is configured as the ending segment, on one hand, the first current collector may increase hardness of the electrode assembly; on the other hand, in some embodiments where the second current collector is a copper foil, this also reduces the risk of the electrolyte solution easily corroding the second current collector when the second current collector is used at the end.

A second aspect of this application further provides an electronic device including the foregoing electrochemical device.

### BRIEF DESCRIPTION OF DRAWINGS

The above and/or additional aspects and advantages of this application will become obvious and easy to understand from the description of some embodiments with reference to the following drawings.
FIG. 1 is a front view of an electrochemical device according to an embodiment of this application.
FIG. 2 is a top view of an electrode assembly of the electrochemical device shown in FIG. 1 in some embodiments.
FIG. 3 is an unfolded schematic diagram of a first electrode plate of the electrode assembly shown in FIG. 2.
FIG. 4 is an unfolded schematic diagram of a second electrode plate of the electrode assembly shown in FIG. 2.
FIG. 5 is a cross-sectional view of a bonding member of the electrochemical device shown in FIG. 2.
FIG. 6 is a rear view of the first electrode plate shown in FIG. 3.
FIG. 7 is a top view of an electrode assembly of the electrochemical device shown in FIG. 1 in some other embodiments.
FIG. 8 is a top view of an electrode assembly of the electrochemical device shown in FIG. 1 in some other embodiments.
FIG. 9 is a top view of an electrode assembly of the electrochemical device shown in FIG. 1 in some other embodiments.
FIG. 10 is a top view of an electrode assembly of the electrochemical device shown in FIG. 1 in some other embodiments.
FIG. 11 is a top view of an electrode assembly of the electrochemical device shown in FIG. 1 in some other embodiments.
FIG. 12 is a top view of an electrode assembly of the electrochemical device shown in FIG. 1 in some other embodiments.
FIG. 13 is a schematic structural diagram of an electronic device according to an embodiment of this application.

**Reference signs of main components:**

| | |
|---|---|
| Electronic device | 1 |
| Housing | 10 |
| First housing | 11 |
| Second housing | 12 |
| Electrode assembly | 20 |
| First electrode plate | 21 |
| Second electrode plate | 22 |
| Separator | 23 |
| First tab | 30 |
| Second tab | 40 |
| Bonding member | 50 |
| Bonding layer | 50a |
| Metal layer | 50b |
| First concave portion | 50c |
| Second concave portion | 50d |
| First bonding member | 51 |
| Second bonding member | 52 |
| Third bonding member | 53 |
| Fourth bonding member | 54 |
| Fifth bonding member | 55 |
| Sixth bonding member | 56 |
| Electrochemical device | 100 |
| First current collector | 210 |
| First active material layer | 211 |
| First uncoated foil zone | 212 |
| Second current collector | 220 |
| Second active material layer | 221 |
| Second uncoated foil zone | 222 |
| Edge | 500 |
| First region | 2120 |
| First segment | 2121 |
| First bent segment | 2122 |
| Second segment | 2123 |
| Second bent segment | 2124 |
| Third region | 2125 |
| Fourth region | 2126 |
| Second region | 2220 |
| Third segment | 2221 |
| Third bent segment | 2222 |
| Fourth segment | 2223 |
| Fourth bent segment | 2224 |
| Winding direction | D |
| Winding center | O |
| First direction | X |
| Second direction | Y |
| Third direction | Z |
| Thickness | T₁ and T₂ |

### DESCRIPTION OF EMBODIMENTS

The following clearly and detailly describes the technical solutions in some embodiments of this application. Apparently, the described embodiments are some rather than all of these embodiments of this application. Unless otherwise defined, all technical and scientific terms used herein shall have the same meanings as commonly understood by persons skilled in the art to which this application belongs. The terms used in the specification of this application are merely intended to describe specific embodiments rather than to limit this application.

The following describes some embodiments of this application in detail. However, this application may be embodied in many different implementations and should not be construed as being limited to the example embodiments set forth herein. Rather, these example embodiments are provided so that this application may be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A may be directly connected to the element B, or an intervening element C may be present therebetween such that the element A and the element B are indirectly connected to each other.

Further, the use of "may" when describing embodiments of this application relates to "one or more embodiments of this application."

The technical terms used herein are merely intended to describe specific embodiments rather than to limit this application. As used herein, the singular forms are intended to include the plural forms as well, unless otherwise clearly indicated in the context. It should be further understood that the term "include" used in this specification indicates the presence of stated features, numerical values, steps, operations, elements, and/or components but do not preclude the presence or addition of one or more other features, numerical values, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that spatial related terms are intended to encompass different orientations of a device or a device in use or operation in addition to the orientations depicted in the figures. For example, if the device in the figures is turned over, elements described as "over" or "above" other elements or features would then be oriented "beneath" or "below" the other elements or features. Thus, the example term "above" may include both directions of above and below. It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

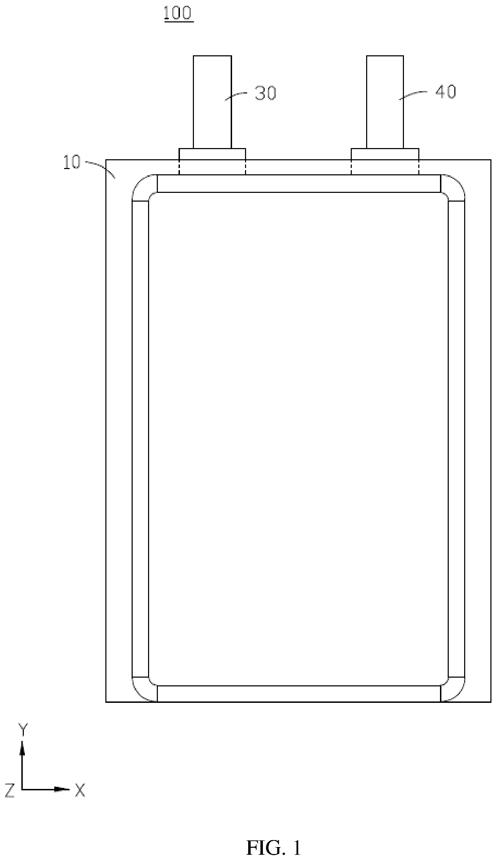

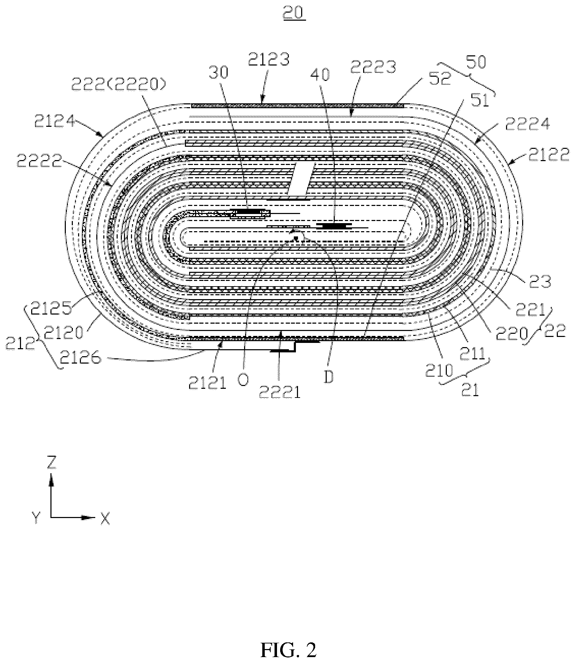

Referring to FIGs. 1, and 2, an embodiment of this application provides an electrochemical device 100, including a housing 10 and an electrode assembly 20 disposed within the housing 10. In some embodiments, the electrochemical device 100 is a pouch battery. The housing 10 may be a packaging bag obtained by packaging with a packaging film, which means the electrochemical device 100 is a pouch battery. In other embodiments, the electrochemical device 100 may also be a steel housing battery or an aluminum housing battery, which is not limited in this application.

The electrode assembly 20 is of a winding structure, including a first electrode plate 21, a second electrode plate 22, and a separator 23 disposed between the first electrode plate 21 and the second electrode plate 22. The separator 23 is configured to prevent direct contact between the first electrode plate 21 and the second electrode plate 22, thereby reducing the possibility of a short circuit caused by contact between the first electrode plate 21 and the second electrode plate 22. The electrochemical device 100 further includes a first tab 30 and a second tab 40. The first tab 30 is electrically connected to the first electrode plate 21, and the second tab 40 is electrically connected to the second electrode plate 22. The first tab 30 and the second tab 40 extend from one end of the housing 10 to connect to external devices (not shown in the figures). A three-dimensional coordinate system is established according to the mutually perpendicular first direction X, second direction Y, and third direction Z. In this application, the first direction X is a direction from the first tab 30 to the second tab 40; the second direction Y is a direction in which the first tab 30 and the second tab 40 extend from the electrode assembly 20, or a direction of a winding center O of the electrode assembly 20; and the third direction Z is a thickness direction of the electrode assembly 20. The first electrode plate 21, the separator 23, and the second electrode plate 22 are sequentially stacked and wound around the winding center O to form the electrode assembly 20. For example, the stack body 2 may be wound around the winding center O in a counterclockwise direction (winding direction D) to form the electrode assembly 20. In some embodiments, the first electrode plate 21 may be a positive electrode plate, and the second electrode plate 22 may be a negative electrode plate. In other embodiments, the first electrode plate 21 may be a negative electrode plate, and the second electrode plate 22 may be a positive electrode plate.

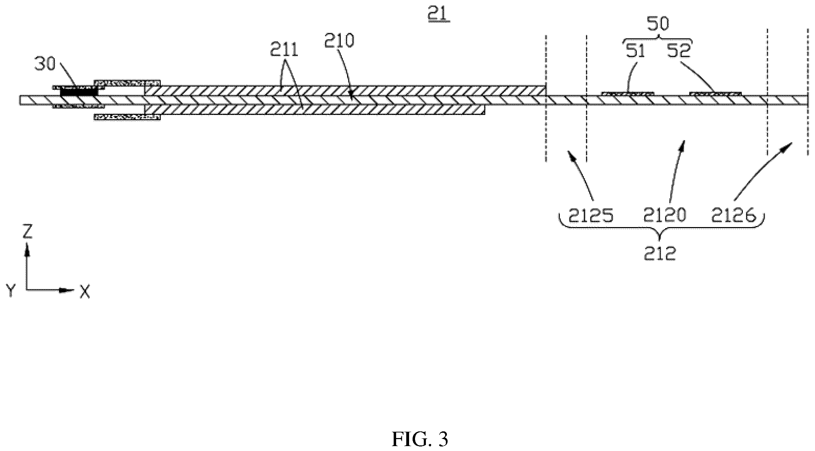

Referring to FIGs. 2 and 3, the first electrode plate 21 includes a first current collector 210 and a first active material layer 211 disposed on two opposite surfaces of the first current collector 210. The first current collector 210 has a current collecting function, for example, the first current collector 210 may include aluminum or nickel. In some embodiments, the first current collector 210 includes aluminum. The first active material layer 211 includes an active material, such as at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium vanadium phosphate, lithium-rich manganese-based materials, or lithium nickel cobalt aluminum oxide.

The first current collector 210 includes a first uncoated foil zone 212, where two surfaces of the first uncoated foil zone 212 are both not disposed with the first active material layer 211. The first uncoated foil zone 212 includes a first region 2120, the first region 2120 being located at an outermost layer of the first electrode plate 21. Further, in some embodiments, the first region 2120 is located at an outermost circle of the electrode assembly 20. When the first region 2120 is configured as the ending segment, on one hand, the first current collector 210 may increase hardness of the electrode assembly 20, serving to protect the electrode assembly 20, and reducing the risk of failure or hazard when the electrochemical device 100 falls; on the other hand, this reduces the risk of electrolyte solution easily corroding the second current collector 220 (such as copper foil) when the second current collector 220 is used as the end. In some embodiments, in the winding direction D of the electrode assembly 20, the first region 2120 includes a first segment 2121, a first bent segment 2122, a second segment 2123, and a second bent segment 2124 connected sequentially. The first segment 2121 and the second segment 2123 may both be straight segments. At this time, the third direction Z is also the direction from the first segment 2121 to the second segment 2123. In other embodiments, the first segment 2121 and the second segment 2123 may also be bent segments.

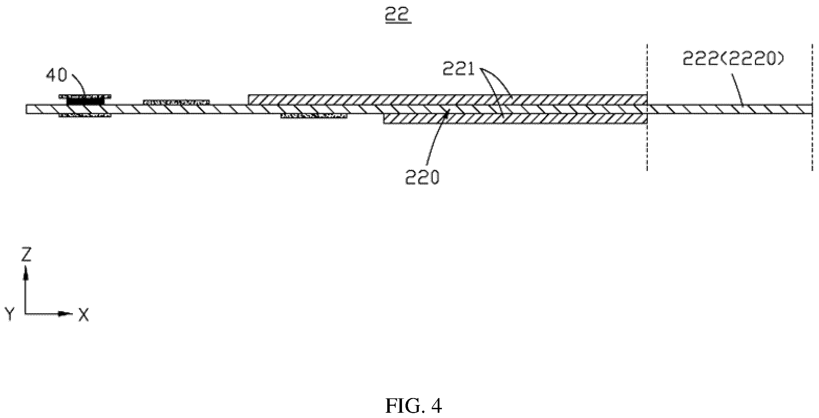

Referring to FIGs. 2 and 4, the second electrode plate 22 includes a second current collector 220 and a second active material layer 221 disposed on a surface of the second current collector 220. The second current collector 220 has a current collecting function, for example, the second current collector 220 may include copper, nickel, or a carbon-based conductive material. In some embodiments, the second current collector 220 includes copper. The second active material layer 221 contains an active material, which may be selected from at least one of a graphite material, an alloy material, lithium metal, or an alloy of it. The graphite material may be selected from at least one of artificial graphite and natural graphite; and the alloy material may be selected from at least one of silicon, silicon oxide, tin, or titanium sulfide.

The second current collector 220 includes a second uncoated foil zone 222, where two surfaces of the second uncoated foil zone 222 are both not disposed with the second active material layer 221. The second uncoated foil zone 222 includes a second region 2220, the second region 2220 being located at an outermost layer of the second electrode plate 22. In some embodiments, in the winding direction D of the electrode assembly 20, the second region 2220 includes a third bent segment 2222, a third segment 2221, a fourth bent segment 2224, and a fourth segment 2223 connected sequentially. The third segment 2221 and the fourth segment 2223 may both be straight segments. In other embodiments, the third segment 2221 and the fourth segment 2223 may also be bent segments.

As shown in FIG. 2, in the third direction Z, the first segment 2121, the third segment 2221, the fourth segment 2223, and the second segment 2123 are sequentially arranged and oppositely disposed. When viewed from the second direction Y, the first segment 2121 and the third segment 2221 are located on a same side of the winding center O, and the second segment 2123 and the fourth segment 2223 are both located on another side of the winding center O. In the first direction X, the second bent segment 2124, the third bent segment 2222, the fourth bent segment 2224, and the first bent segment 2122 are sequentially arranged and oppositely disposed. When viewed from the second direction Y, the second bent segment 2124 and the third bent segment 2222 are both located on a same side of the winding center O, and the first bent segment 2122 and the fourth bent segment 2224 are both located on another side of the winding center O.

In this application, the "outermost layer" refers to that when the first electrode plate 21 is wound along the winding direction D, the first region 2120 is located at an outermost side or outermost circle of the wound first electrode plate 21; and when the first electrode plate 21 is wound along the winding direction D, the second region 2220 is located at an outermost side or outermost circle of the wound second electrode plate 22.

In some embodiments, the first region 2120 is located at an outermost circle of the electrode assembly 20, and the second region 2220 is located at a next outermost circle of the electrode assembly 20.

At least part of the second region 2220 is disposed opposite the first region 2120 with the separator 23 in between. In some embodiments, the third segment 2221 is disposed opposite the first segment 2121 with the separator 23 in between, the fourth bent segment 2224 is disposed opposite the first bent segment 2122 with the separator 23 in between, and the fourth segment 2223 is disposed opposite the second segment 2123 with the separator 23 in between. Thus, the first region 2120, the second region 2220, and the separator 23 disposed between the first region 2120 and the second region 2220 may collectively form a vest structure of the electrode assembly 20, and the vest structure is a part most prone to contact short circuit when the electrochemical device 100 undergoes mechanical abuse (for example during nailing, foreign objects pierce the first region 2120, the separator 23, and the second region 2220, causing the first region 2120 and the second region 2220 to come into contact and short circuit; or during heavy object impact, the separator 23 shrinks or breaks, causing the first region 2120 and the second region 2220 to come into contact and short circuit). In some embodiments, the first uncoated foil zone 212 may further include a third region 2125 and a fourth region 2126. In the winding direction D, the third region 2125, the first region 2120, and the fourth region 2126 are sequentially connected. Thus, the first uncoated foil zone 212 forms more than one circle outside the first electrode plate 21. In some embodiments, the second uncoated foil zone 222 only includes the second region 2220. Thus, the second uncoated foil zone 222 forms exactly one circle outside the second electrode plate 22. In this application, "one circle" refers to starting from a point on the winding structure defined as a starting end, winding one full turn along the winding direction D to another point defined as an ending end, with the ending end and the starting end being in a straight line along the third direction Z.

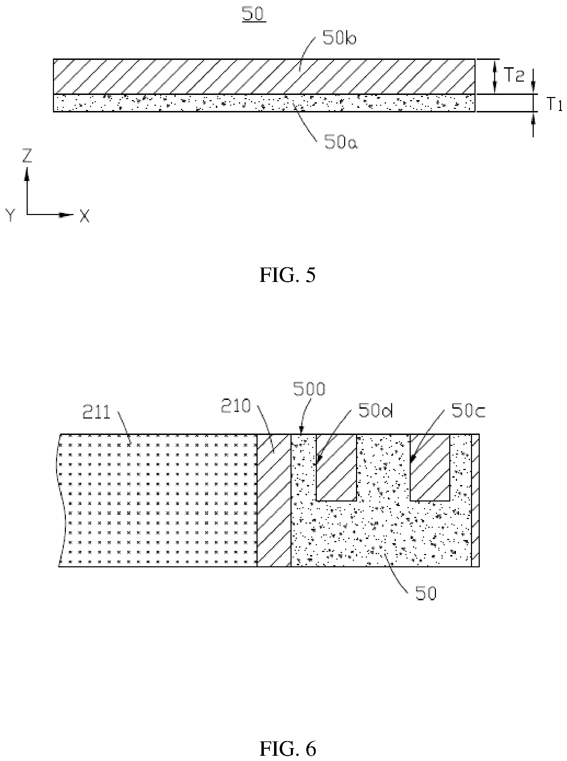

Referring to FIGs. 2 and 3, the electrochemical device 100 further includes a bonding member 50. Referring to FIG. 5, the bonding member 50 includes a bonding layer 50a and a metal layer 50b stacked together. The bonding layer 50a includes a conductive material, and the bonding member 50 is bonded to at least one of the first region 2120 or the second region 2220 through the bonding layer 50a. Since the bonding member 50 as a whole is made of conductive material, when the electrochemical device 100 undergoes mechanical abuse (such as nailing or heavy object impact), the first region 2120 and the second region 2220 may come into contact and conduct through the bonding member 50 and rapidly short circuit, which diverts the short-circuit current within the electrode assembly 20, causing the electrochemical device 100 to discharge, thus reducing the risk of fire or explosion of the electrochemical device 100. Meanwhile, the bonding member 50 may improve the mechanical strength of the first region 2120 and/or the second region 2220, reducing the risk of high-temperature melting at the short-circuit point, so that the electrochemical device 100 may continuously short circuit through the aforementioned short-circuit point when subjected to the aforementioned mechanical abuse, improving the safety and reliability.

Moreover, in the prior art, to reduce the risk of short-circuit point melting between the first uncoated foil zone and the second uncoated foil zone during mechanical abuse such as nailing or heavy object impact, a thickness of the current collector may be increased, or a primer layer may be added to a surface of the first current collector to increase contact resistance. In this application, the bonding member 50 is only disposed on at least one of the first region 2120 or the second region 2220, which not only reduces the risk of high-temperature melting at the short-circuit point during mechanical abuse but also reduces the impact on the energy density of the electrochemical device 100.

As shown in FIG. 2, in some embodiments, the bonding member 50 is disposed on the first region 2120. Furthermore, in some embodiments, when viewed from the second direction Y, along the winding direction D, the bonding members 50 disposed on the first region 2120 are located on different sides of the winding center O, respectively. For example, the bonding members 50 disposed on the first region 2120 are respectively located on different sides of the winding center O in the third direction Z. At this time, when the electrochemical device 100 is nailed (especially when the nailing depth is less than the thickness of the electrochemical device 100, such as a nailing depth of 50% of the thickness of the electrochemical device 100, that is, shallow penetration) or impacted by a heavy object from different sides of the winding center O, this always enables the first region 2120 and the second region 2220 to come into contact and short circuit and reduces the risk of high-temperature melting at the short-circuit point. Moreover, when a foreign object completely penetrates the electrochemical device 20 (such as a nailing depth of 100% of the thickness of the electrochemical device 100, that is, full penetration), the bonding members 50 located on different sides of the winding center O increase the number of continuous short-circuit points within the electrode assembly 20, which helps to divert the short-circuit current within the electrode assembly 20 more quickly, further reducing the risk of fire or explosion of the electrochemical device 100 and improving the safety and reliability of the electrochemical device 100.

In some embodiments, the bonding layer 50a includes at least one of a conductive silver adhesive or a conductive silicone adhesive, providing the bonding layer 50a with high conductivity and adhesion. In some embodiments, the metal layer 50b includes at least one of copper, aluminum, titanium, or nickel, providing the metal layer 50b with high conductivity.

Referring to FIG. 5, in some embodiments, a thickness T₁ of the bonding layer 50a is 4 micrometers to 10 micrometers. Thus, while the reliability of bonding the bonding layer 50a onto the first region 2120 and/or the second region 2220 is increased, the impact on the energy density of the electrochemical device 100 due to the excessive thickness of the bonding layer 50a is reduced. In some embodiments, a thickness T₂ of the metal layer 50b is in a range of 4 micrometers to 20 micrometers. Thus, while the mechanical strength of the first region 2120 and/or the second region 2220 is increased, the impact on the energy density of the electrochemical device 100 due to the excessive thickness of the metal layer 50b is reduced.

Referring to FIG. 6, in some embodiments, the bonding member 50 is provided with a first concave portion 50c and a second concave portion 50d. In the third direction Z, a projection of the first concave portion 50c in the first region 2120 covers a projection of the first tab 30 in the first region 2120, and a projection of the second concave portion 50d in the first region 2120 covers a projection of the second tab 40 in the first region 2120. The arrangement of the first concave portion 50c and the second concave portion 50d reduces the total thickness of the electrode assembly 20 in the third direction Z at the locations corresponding to the first tab 30 and the second tab 40, thereby compensating for the increase in the total thickness of the electrochemical device 100 at the locations corresponding to the first tab 30 and the second tab 40 due to the provision of the bonding member 50, which is conducive to improving energy density. The first concave portion 50c and the second concave portion 50d both penetrate one edge 500 of the bonding member 50 at the winding center O. In the thickness direction of the bonding member 50 (that is, the stacking direction of the bonding layer 50a and the metal layer 50b), a depth of the first concave portion 50c and the second concave portion 50d may be set according to a thickness of the first tab 30 and the second tab 40, respectively. For example, each of the first concave portion 50c and the second concave portion 50d may be formed on the bonding layer 50a, or on the metal layer 50b, or on both the bonding layer 50a and the metal layer 50b.

The following will describe this application in detail with reference to specific examples. In absence of conflicts, the following examples and features in the examples may be combined.

### Example 1

As shown in FIG. 2, the bonding member 50 included a first bonding member 51 and a second bonding member 52. In the winding direction D, the first bonding member 51 and the second bonding member 52 were spaced apart. In this example, the first bonding member 51 and the second bonding member 52 were bonded to the surfaces of the first segment 2121 and the second segment 2123, respectively. Thus, when viewed from the second direction Y, the first bonding member 51 and the second bonding member 52 were located on different sides of the winding center O, respectively. Moreover, the first bonding member 51 was disposed on a surface of the first segment 2121 facing the winding center O, and the second bonding member 52 was disposed on a surface of the second segment 2123 facing the winding center O.

In this example, the first current collector 210 was aluminum foil, and the second current collector 220 was copper foil. Since the melting point of aluminum foil itself is relatively low, the bonding member 50 being bonded to the surface of the aluminum foil could reduce the risk of high-temperature melting at the short-circuit point during nailing, thus the electrochemical device 100 had higher safety and reliability during nailing.

### Example 2

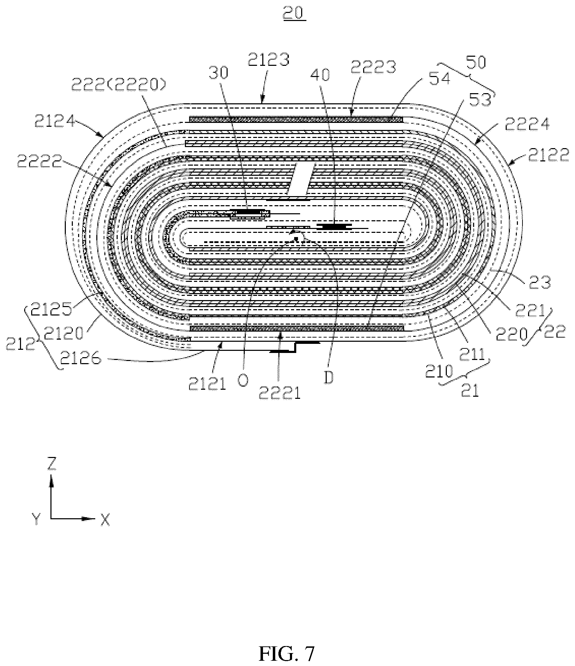

As shown in FIG. 7, the bonding member 50 was disposed on the second region 2220. In this example, the bonding member 50 included a third bonding member 53 and a fourth bonding member 54. In the winding direction D, the third bonding member 53 and the fourth bonding member 54 were spaced apart. The third bonding member 53 and the fourth bonding member 54 were bonded to the surfaces of the third segment 2221 and the fourth segment 2223, respectively. Thus, when viewed from the second direction Y, the third bonding member 53 and the fourth bonding member 54 were located on different sides of the winding center O, respectively. Moreover, the third bonding member 53 was disposed on a surface of the third segment 2221 facing the winding center O, and the fourth bonding member 54 was disposed on a surface of the fourth segment 2223 facing the winding center O.

In this example, the first current collector 210 was aluminum foil, and the second current collector 220 was copper foil. Compared with Example 1, since hardness and mechanical strength of copper foil itself are relatively high, the bonding member 50 being bonded to the surface of the copper foil made the improvement in the mechanical strength of the vest structure more significant, so during heavy object impact, the copper foil could maintain a large area of contact conduction with the aluminum foil to divert the short-circuit current within the electrode assembly 20, thus the electrochemical device 100 had higher safety and reliability during heavy object impact.

### Example 3

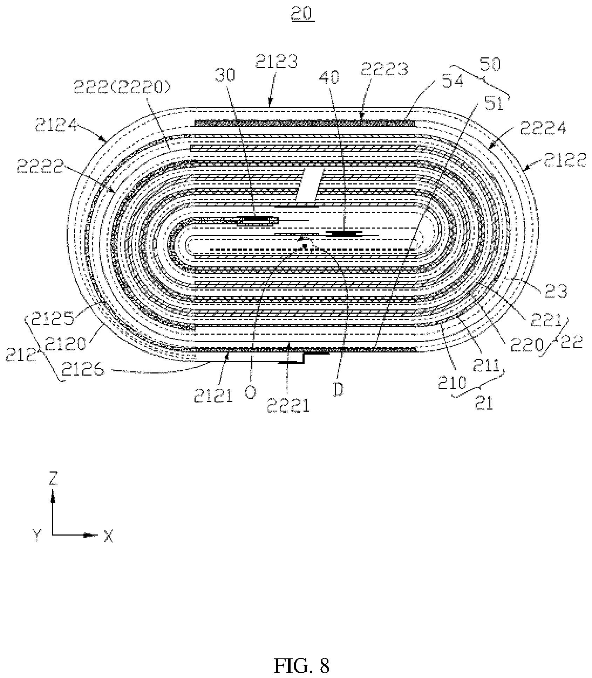

As shown in FIG. 8, the bonding member 50 was disposed on both the first region 2120 and the second region 2220. In this example, the bonding member 50 included a first bonding member 51 and a fourth bonding member 54. In the winding direction D, the first bonding member 51 and the fourth bonding member 54 were spaced apart. The first bonding member 51 was bonded to a surface of the first segment 2121, and the fourth bonding member 54 was bonded to a surface of the fourth segment 2223. Thus, when viewed from the second direction Y, the first bonding member 51 and the fourth bonding member 54 were located on different sides of the winding center O, respectively. Moreover, the first bonding member 51 was disposed on a surface of the first segment 2121 facing the winding center O, and the fourth bonding member 54 was disposed on a surface of the fourth segment 2223 facing the winding center O.

In this example, the first current collector 210 was aluminum foil, and the second current collector 220 was copper foil. Compared with Example 1 and Example 2, since the bonding member 50 was disposed on both the copper foil and the aluminum foil, the electrochemical device 100 had higher safety and reliability during nailing and heavy object impact.

### Example 4

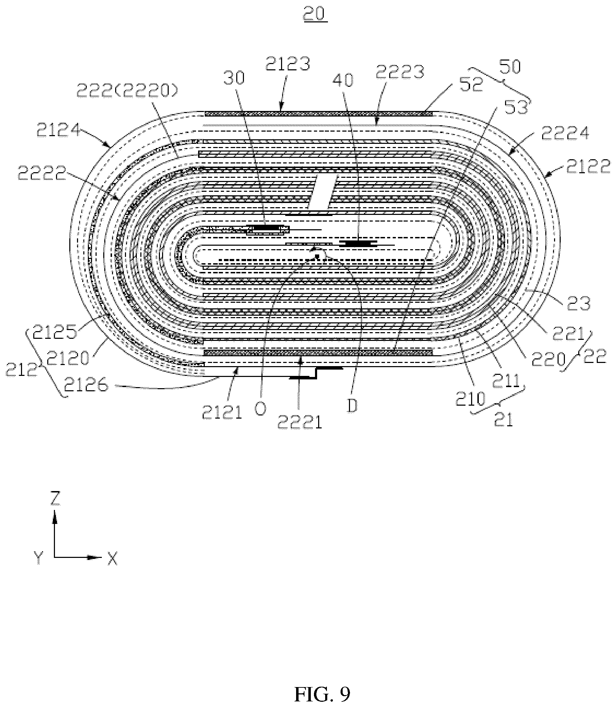

As shown in FIG. 9, the bonding member 50 was disposed on both the first region 2120 and the second region 2220. In this example, the bonding member 50 included a second bonding member 52 and a third bonding member 53. In the winding direction D, the second bonding member 52 and the third bonding member 53 were spaced apart. The second bonding member 52 was bonded to a surface of the second segment 2123, and the third bonding member 53 was bonded to a surface of the third segment 2221. Thus, when viewed from the second direction Y, the second bonding member 52 and the third bonding member 53 were located on different sides of the winding center O, respectively. Moreover, the second bonding member 52 was disposed on a surface of the second segment 2123 facing the winding center O, and the third bonding member 53 was disposed on a surface of the third segment 2221 facing the winding center O.

In this example, the first current collector 210 was aluminum foil, and the second current collector 220 was copper foil. Compared with Example 1 and Example 2, since the bonding member 50 was disposed on both the copper foil and the aluminum foil, the electrochemical device 100 had higher safety and reliability during both nailing and heavy object impact.

### Example 5

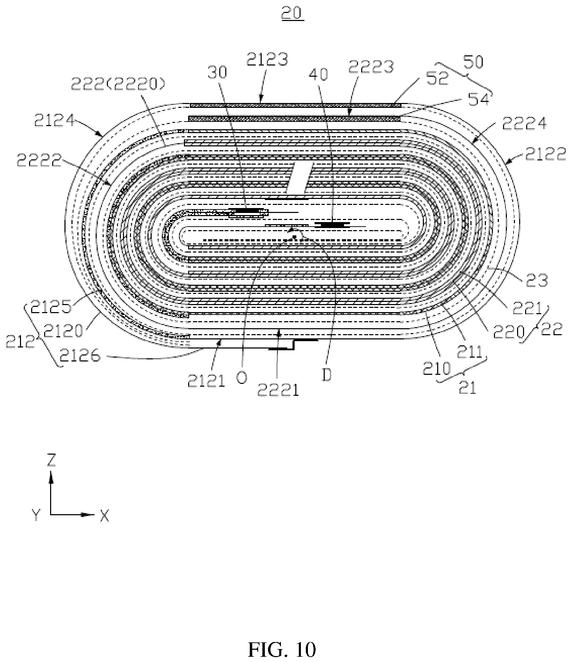

As shown in FIG. 10, the bonding member 50 was disposed on both the first region 2120 and the second region 2220. In this example, the bonding member 50 included a second bonding member 52 and a fourth bonding member 54. In the winding direction D, the second bonding member 52 and the fourth bonding member 54 were spaced apart. The second bonding member 52 was bonded to a surface of the second segment 2123. The fourth bonding member 54 was bonded to a surface of the fourth segment 2223. Thus, when viewed from the second direction Y, the second bonding member 52 and the fourth bonding member 54 were located on a same side of the winding center. Moreover, the second bonding member 52 was disposed on a surface of the second segment 2123 facing the winding center O, and the fourth bonding member 54 was disposed on a surface of the fourth segment 2223 facing the winding center O.

In this example, the first current collector 210 was aluminum foil, and the second current collector 220 was copper foil. Compared with Example 3 and Example 4, when the electrochemical device 100 was subjected to nailing or heavy object impact, the bonding member 50 simultaneously improved the mechanical strength of both the copper foil and the aluminum foil at a same short-circuit point, thus further reducing the risk of high-temperature melting at the short-circuit point and improving the safety and reliability of the electrochemical device 100.

### Example 6

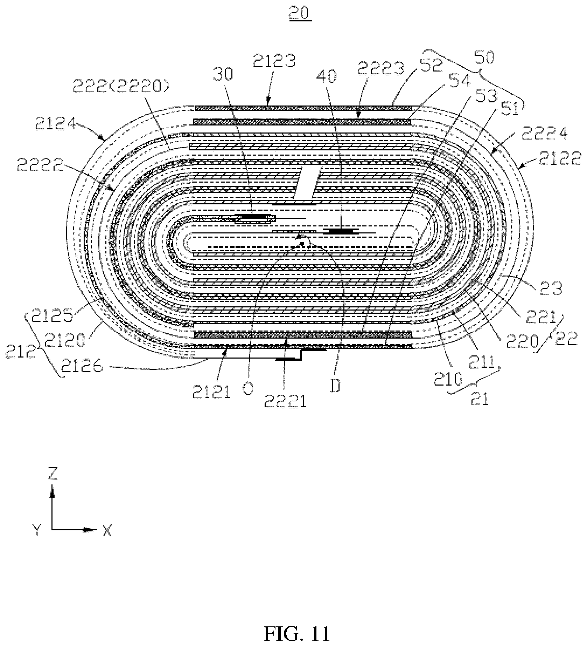

As shown in FIG. 11, in this example, the bonding member 50 included a first bonding member 51, a second bonding member 52, a third bonding member 53, and a fourth bonding member 54. In the winding direction D, the first bonding member 51, the second bonding member 52, the third bonding member 53, and the fourth bonding member 54 were spaced apart. The first bonding member 51 and the second bonding member 52 were bonded to the surfaces of the first segment 2121 and the second segment 2123, respectively. The third bonding member 53 and the fourth bonding member 54 were bonded to the surfaces of the third segment 2221 and the fourth segment 2223, respectively. Thus, when viewed from the second direction Y, the first bonding member 51 and the third bonding member 53 were located on one side of the winding center O, and the second bonding member 52 and the fourth bonding member 54 were located on another side of the winding center O.

In this example, the first current collector 210 was aluminum foil, and the second current collector 220 was copper foil. Compared with Example 5, when a foreign object completely penetrated the electrode assembly 20, the bonding members 50 located on different sides of the winding center O increased the number of continuous short-circuit points within the electrode assembly 20, which helped to divert the short-circuit current within the electrode assembly 20 more quickly, thus improving the safety and reliability of the electrochemical device 100.

### Example 7

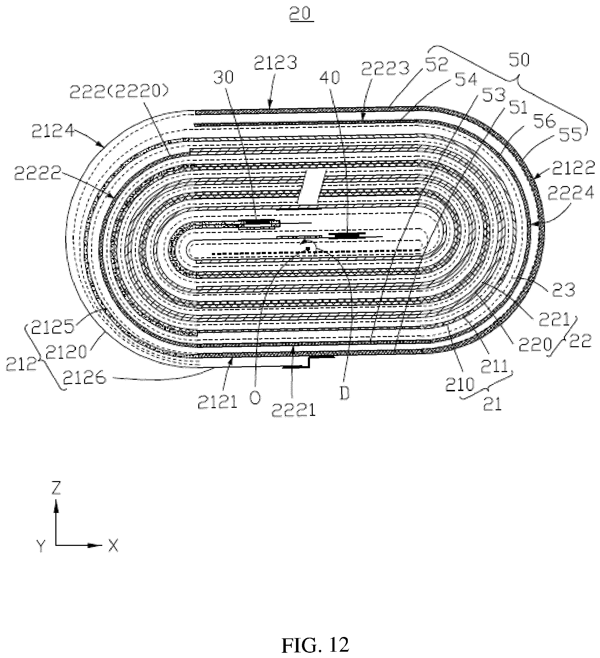

The difference from Example 6 was that, as shown in FIG. 12, in the winding direction D, the first bonding member 51 and the second bonding member 52 might be connected. In this case, the bonding member 50 might further include a fifth bonding member 55. The fifth bonding member 55 was disposed on a surface of at least one of the first bent segment 2122 or the second bent segment 2124, for connecting the first bonding member 51 and the second bonding member 52.

Moreover, in the winding direction D, the third bonding member 53 and the fourth bonding member 54 might also be connected. In this case, the bonding member 50 might further include a sixth bonding member 56. The sixth bonding member 56 was disposed on a surface of at least one of the third bent segment 2222 or the fourth bent segment 2224, for connecting the third bonding member 53 and the fourth bonding member 54. At this time, when the electrochemical device 100 was nailed or impacted by a heavy object in the first direction X, this similarly enabled the first region 2120 and the second region 2220 to come into contact and short circuit and reduced the risk of high-temperature melting at the short-circuit point.

The electrochemical device 100 of this application may be any device capable of undergoing an electrochemical reaction. Specifically, the electrochemical device 100 includes all kinds of primary batteries, secondary batteries, fuel batteries, solar batteries, or capacitors (for example, super capacitors). Optionally, the electrochemical device 100 may be a secondary battery, including a lithium metal secondary battery, a lithium-ion secondary battery, a lithium polymer secondary battery, a lithium-ion polymer secondary battery, and a sodium-ion battery.

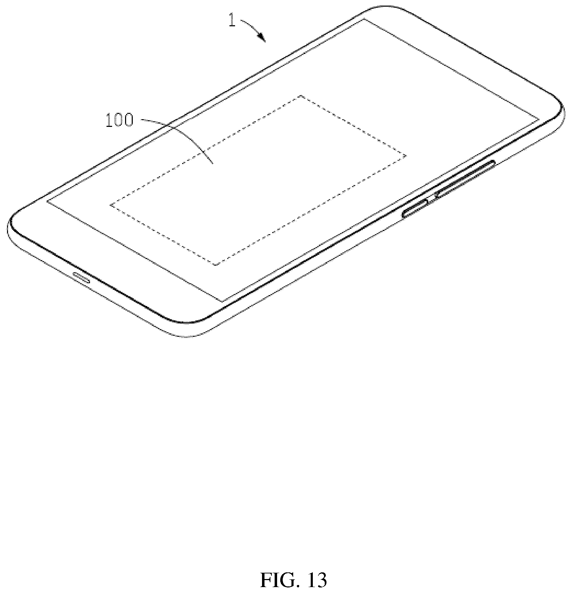

Referring to FIG. 13, an embodiment of this application further provides an electronic device 1, including the foregoing electrochemical device 100. The electronic device 1 of this application may be, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following describes the performance of the electrochemical device 100 provided by this application through a comparative example in conjunction with the aforementioned Examples 1 to 7.

### Comparative example

Similar to Example 1, the difference is that the electrochemical device 100 was not provided with the bonding member 50.

Then, 10 electrochemical devices 100 from each example and each comparative example were taken respectively for nail tests and impact tests, and the results of each test were recorded in Table 1.

The steps of the nail test included: (1) The electrochemical device 100 was fully charged at 25±3°C (the electrochemical device 100 was charged with a constant current of 0.5C to 4.4 V, then charged with a constant voltage of 4.4 V until the current dropped to 0.05C). (2) A steel nail with a diameter of 4 mm and made of carbon steel was used to nailed the electrochemical device 100 (that is, an outer surface of the second segment 2123) from the front side at room temperature (for example, 25°C). The nailing speed was 100 mm/s, and the nailing depth was based on a standard of 50% of a thickness of the electrochemical device 100. (3) It was observed whether the electrochemical device 100 caught fire or exploded.

The steps of the impact test included: (1) The electrochemical device 100 was fully charged at 25±3°C (the electrochemical device 100 was charged with a constant current of 0.5C to 4.4 V, then charged with a constant voltage of 4.4 V until the current dropped to 0.05C). (2) The electrochemical device 100 was placed on the test platform, and a round rod with a diameter of 15.8 mm was placed vertically at the center of the front side of the electrochemical device 100. (3) A heavy hammer with a weight of 9.1±0.1 kg was dropped from a height of 610±25 mm in a vertical free-fall state, impacting the round rod at an intersection of the round rod and the front side of the electrochemical device 100. (4) It was observed whether the battery caught fire or exploded.

**Table 1**

| | Pass rate of impact test | Pass rate of nail test |
|---|---|---|
| Comparative example | 2/10 | 3/10 |
| Example 1 | 6/10 | 10/10 |
| Example 2 | 10/10 | 6/10 |
| Example 3 | 10/10 | 6/10 |
| Example 4 | 8/10 | 10/10 |
| Example 5 | 10/10 | 10/10 |
| Example 6 | 10/10 | 10/10 |
| Example 7 | 10/10 | 10/10 |

| | | |
|---|---|---|
| Note: The test pass rate X/10 indicates that out of 10 samples tested, X samples have passed the test. | | |

From the test results in Table 1, it could be seen that compared with the comparative example, Examples 1 to 7 have higher pass rates in the nailing and heavy object impact tests because the bonding member 50 was provided on at least one of the first region 2120 or the second region 2220, thus greatly improving the safety performance of the electrochemical device. In the tests it was found that, compared with Example 1 and Example 4, Examples 2 to 3 and 5 to 7 all have higher pass rates in the heavy object impact test because the bonding member 50 was provided on the second region 2220 (especially at the fourth segment 2223) located on the front of the electrochemical device 100. Compared with Examples 2 to 3, Example 1 and Examples 4 to 7 have higher pass rates in the nailing test because the bonding member 50 was provided on the first region 2120 (especially at the second segment 2123) located on the front of the electrochemical device 100.

The descriptions disclosed above are only the preferred embodiments of this application, and do not, certainly, constitute limitation to this application. Accordingly, any equivalent changes made in accordance with this application still fall within the scope of this application.

## Claims

1. An electrochemical device, comprising an electrode assembly; wherein the electrode assembly is of a winding structure, comprising a first electrode plate, a second electrode plate, and a separator disposed between the first electrode plate and the second electrode plate; the first electrode plate comprises a first current collector and a first active material layer disposed on a surface of the first current collector, the first current collector comprises a first uncoated foil zone not disposed with the first active material layer, the second electrode plate comprises a second current collector and a second active material layer disposed on a surface of the second current collector, and the second current collector comprises a second uncoated foil zone not disposed with the second active material layer; and
the first uncoated foil zone comprises a first region, the first region being located at an outermost layer of the first electrode plate, and the second uncoated foil zone comprises a second region, the second region being located at an outermost layer of the second electrode plate; wherein
the electrochemical device further comprises a bonding member, the bonding member comprises a bonding layer and a metal layer stacked together, the bonding layer comprises a conductive material, and the bonding member is bonded to at least one of the first region or the second region through the bonding layer.

2. The electrochemical device according to claim 1, wherein in a winding direction of the electrode assembly, the first region comprises a first segment, a first bent segment, a second segment, and a second bent segment connected sequentially, the bonding member being disposed on surfaces of the first segment and the second segment.

3. The electrochemical device according to claim 2, wherein the bonding member is further disposed on a surface of at least one of the first bent segment or the second bent segment.

4. The electrochemical device according to claim 1 or 2, wherein in the winding direction of the electrode assembly, the second region comprises a third bent segment, a third segment, a fourth bent segment, and a fourth segment connected sequentially, the bonding member being disposed on surfaces of the third segment and the fourth segment.

5. The electrochemical device according to claim 4, wherein the bonding member is further disposed on a surface of at least one of the third bent segment or the fourth bent segment.

6. The electrochemical device according to claim 1, wherein in a winding direction of the electrode assembly, the bonding member disposed on the first region and the bonding member disposed on the second region are located on different sides of a winding center of the electrode assembly, respectively.

7. The electrochemical device according to claim 1, wherein in a winding direction of the electrode assembly, the bonding member disposed on the first region and the bonding member disposed on the second region are located on a same side of a winding center of the electrode assembly.

8. The electrochemical device according to claim 1, wherein the electrode assembly further comprises a first tab and a second tab, the first tab being electrically connected to the first current collector, and the second tab being electrically connected to the second current collector; and the bonding member is provided with a first concave portion and a second concave portion, wherein in a thickness direction of the electrode assembly, a projection of the first concave portion in the first region covers a projection of the first tab in the first region, and a projection of the second concave portion in the first region covers a projection of the second tab in the first region.

9. The electrochemical device according to claim 1, wherein the bonding layer comprises at least one of a conductive silver adhesive or a conductive silicone adhesive; and/or the metal layer comprises at least one of copper, aluminum, titanium, or nickel.

10. The electrochemical device according to claim 1, wherein a thickness of the bonding layer is 4 micrometers to 10 micrometers, and/or a thickness of the metal layer is in a range of 4 micrometers to 20 micrometers.

11. The electrochemical device according to claim 1, wherein the first region is located at an outermost circle of the electrode assembly, and the second region is located at a next outermost circle of the electrode assembly.

12. An electronic device, comprising the electrochemical device according to any one of claims 1 to 11.
